Europäisches Patentamt

European Patent Office

Office européen des brevets

(11) Publication number: **0 171 995**
**B1**

# EUROPEAN PATENT SPECIFICATION

(45) Date of publication of patent specification: **06.02.91**

(51) Int. Cl.⁵: **A 21 D 2/26**

(21) Application number: **85305618.2**

(22) Date of filing: **07.08.85**

(54) A food quality improving agentcontaining vital gluten.

(30) Priority: **10.08.84 JP 167456/84**
**23.08.84 JP 175638/84**

(43) Date of publication of application:
**19.02.86 Bulletin 86/08**

(45) Publication of the grant of the patent:
**06.02.91 Bulletin 91/06**

(84) Designated Contracting States:
**BE DE FR GB NL**

(56) References cited:
**EP-A-0 075 463**
**EP-A-0 109 244**
**EP-A-0 134 658**

(73) Proprietor: **KYOWA HAKKO KOGYO CO., LTD.**
**6-1, Ohte-Machi 1-chome**
**Chiyoda-ku Tokyo-to (JP)**

(72) Inventor: **Torigoe, Takaoki**
**4284-21, Ami Ami-cho**
**Inashiki-gun Ibaraki-ken (JP)**
Inventor: **Kobayashi, Makoto**
**2-4-35, Koiwadahigashi**
**Tsuchiura-shi Ibaraki-ken (JP)**
Inventor: **Hirose, Haruo**
**440-2, Oaza Tajuku Akeno-machi**
**Makabe-gun Ibaraki-ken (JP)**
Inventor: **Katoh, You**
**807-18, Ushiku Ushiku-machi**
**Inashiki-gun Ibaraki-ken (JP)**
Inventor: **Tezuka, Toshihiko**
**4845-4, Ami Ami-cho**
**Inashiki-gun Ibaraki-ken (JP)**
Inventor: **Ogino, Takehiko**
**2140, Mimura**
**Ishioka-shi Ibaraki-ken (JP)**
Inventor: **Ohta, Shigenori**
**3-6-17 Iwatokita**
**Komae-shi Tokyo (JP)**

(74) Representative: **Lambert, Hugh Richmond et al**
**D. YOUNG & CO. 10 Staple Inn**
**London, WC1V 7RD (GB)**

Courier Press, Leamington Spa, England.

**Description**

The present invention relates to a food quality improving agent containing a specified vital gluten and adjuvants.

It is well that the production of high quality bread greatly depends on the amount and quality of the gluten contained in flour.

The qualities of flour commercially available in the market are different according to brands or makers and also seasonal or production year's change. In the bread production field, dough improving agents prepared by mixing emulsifiers, enzymes, vital gluten and the like are widely used in order to obtain good quality bread when such flour is used as the main raw material.

The present invention provides a food quality improving agent containing (A) a vital gluten (hereinafter referred to as PL gluten) having either (i) a bound phospholipid content of 2% (w/w) or more and a bound monoacyl glycerophospholipid content in the bound phospholipid of more than 30 mol% and less than 50 mol%, or (ii) a bound phospholipid content of 0.5% (w/w) or more and a bound monoacyl glycerophospholipid content in the bound phospholipid of 50 mol% or more; and (B) in admixture therewith one or more of phospholipase A, gum, vital gluten wherein the bound monoacyl glycerophospholipid content in the bound phospholipid is less than 30 mol% (commercially available gluten), monoglyceride, soybean lecithin, whey protein, soybean protein, sodium caseinate, citric acid, succinic acid, alpha-amylase and beta-amylase.

In accordance with the present invention, it has been found that such a food quality improving agent has the effect of decreasing mechanical damage to the dough during working and improving the quality (texture, specific volume, staling degree, etc.) of the final product. More particularly, the workability and especially the elasticity of the dough is improved.

A detailed description concerning the preparation of the PL gluten used herein is given in European Patent Application published as No. 0 134 658 on March 20, 1985, and to which reference should be made, but broadly speaking, PL gluten as above defined is obtained by adding phospholipase A (hereinafter referred to as PL-A) to flour (wheat flour) in the ratio of $10^2$ to $10^4$ units per 1 kg of flour, adding water and kneading the mixture before finally washing the kneaded mixture with water to remove starch and other solubles. Alternatively, PL gluten can be obtained by adding PL-A to a mixture of phospholipid and flour and containing phospholipid in an amount of from 0.1 to 10% based on the weight of the flour, and kneading and washing the mixture in the same way as described above. Alternatively, the phospholipid may first be converted into phospholipid having a high content of monoacyl glycerophospholipid by treatment with PL-A and then adding the converted phospholipid to the flour to bind the phospholipid to the gluten.

The preferred amounts of each adjuvant present in the food quality improving agent of this invention based on 100 parts of PL gluten are as follows:

PL-A (1,000 u/g): 0.01 to 5 parts; gum: 0.5 to 5 parts; vital gluten wherein the bound monoacyl glycerophospholipid content in the bound phospholipid is less than 30 mol% (commercially available gluten): 5 to 70 parts; ascorbic acid: 0.1 to 0.5 parts; monoglyceride or soybean lecithin: 0.1 to 10 parts; whey protein or soybean protein: 1 to 30 parts; sodium caseinate, citric acid, succinic acid, alpha-amylase (10,000 u/g) or beta-amylase (10,000 u/g): 0.1 to 1 part.

If desired, the following adjuvants may also be included: L-lysine hydrochloride: 0.1 to 10 parts; L-proline: 0.1 to 10 parts; and sodium lactate: 0.5 to 10 parts.

Suitable gums for use in the improving agent of the present invention are xanthan gum and locust bean gum, etc.

Whilst the amounts of adjuvants mentioned above are not particularly critical, certain observations can be made. For example, when PL-A is used in amounts less than about 0.01 part, no beneficial effect is achieved. On the other hand, with amounts in excess of 5 parts or more, the product develops an unacceptable odour due to the presence of the PL-A. In the case of gums, amounts less than 0.5 parts seldom show the desired effect of decreasing mechanical damage to the dough, whilst amounts of 5 parts or more result in products, for example bean jam bread, which are poor in shape. Similarly with amounts of ascorbic acid less than 0.1 part, the effect of decreasing mechanical damage to the dough is almost never observed and the specific volume of the product is lowered. In contrast, when ascorbic acid is used in amounts of 0.5 parts or more the elasticity of the dough suffers, the specific volume of the product is again small and the inner texture of the product is poor. Finally when amylase is used in amounts of less than 0.1 part, the softness and relative staleness of the product suffers whilst amounts of 1 part or more result in a more sticky product and the elasticity of the dough suffers.

In using the food quality improving agents of the present invention in the production of bread, doughnuts, noodles, and Chinese dumplings such as won ton and gyoza, for example, the amounts employed range from 0.1 to 10%, preferably 0.5 to 5%, based on the amount of flour included in the raw materials.

Certain specific embodiments of the invention are illustrated in the following examples.

Example 1

In this example, a food quality improving agent was obtained by uniformly mixing 100 kg of PL gluten

2

EP 0 171 995 B1

(see the Reference Example) and 0.5 kg of PL-A (500,000U) in a blender.

The food quality improving agent was added in an amount of 1% based on the flour to ordinary flour (crude protein 8.5%, ash 0.40%) obtained by grinding domestic wheat and blended in a flour milling plant. Raw noodes were then prepared from that flour according to the following recipe and boiled in boiling water for 13 minutes. The product noodles were then evaluated and the results are shown in Table 1.

Raw noodle recipe:

| | |
|---|---|
| Quality-improved flour | 10,000 g |
| Solution of table salt (Baume degree 10°) | 4,300 g |
| Water | |

Production conditions:

| | |
|---|---|
| Kneading by a kneader | At low speed, 30 min. |
| Floor time | 30 min. |
| Dividing, rounding | 2 kg ball |
| Bench time | 60 min. |
| Rolled and a cutter | 3 m/m thick, edge No. 12 (for noodles) |

As a control, noodles were prepared in the same manner as described above except using unimproved ordinary flour (crude protein 9.0%, ash 0.45%) instead of the quality improved flour.

TABLE 1

| | Rate of loss in elution | Texture | Taste | Note |
|---|---|---|---|---|
| Noodles made from the quality-improved flour | 9.0% | 5 | 4 | Soft and elastic |
| Control | 9.5% | 4 | 4 | Ordinary |

Evaluation: 5 very good; 4 good.

As is apparent from Table 1, noodles according to the present invention have a soft and elastic texture when compared with the ordinary texture of the control.

Example 2

In this example, a food quality improving agent was obtained by uniformly mixing 100 kg of PL gluten, 1 kg of PL-A (1,000,000 u) and 5 kg of L-lysine hydrochloride in a blender.

The food quality improving agent was then added to noodle flour (Semi-hard flour) (crude protein 10.5%, ash 0.42%) in an amount of 2% based on the flour and blended in a flour milling plant to obtain quality-improved flour.

Then, using that flour, bread loaf was obtained under the following dough-composition and production conditions:

Production conditions:

| | |
|---|---|
| Sponge fermentation | 25 to 28°C, 4 hours |
| Floor time | 20 min. |
| Bench time | 17 min. |
| Proofing | 38 to 40°C, 50 min. |
| Baking | 200°C, 35 min. |

Sponge composition:

| | |
|---|---|
| Quality-improved flour | 7,000 g |
| Yeast | 200 g |
| Yeast food* | 10 g |
| Water | 4,000 cc |

| | |
|---|---|
| * Ammonium chloride | 30% (w/w) |
| Calcium carbonate | 10% |
| Calcium primary phosphate | 5% |
| Amylase | 0.2% |
| Corn starch | 54.8% |

3

(The same composition is used hereinafter).

Dough composition:

| | |
|---|---|
| Quality-improved flour | 3,000 g |
| Sugar | 500 g |
| Table salt | 200 g |
| Shortening | 500 g |
| Water | 2,500 cc |

The resulting bread product was compared with the following Controls, and the results are presented in Table 2.

Controls
Bread was prepared in the same manner as described above except that the following flours were used instead of the quality-improved flour.

Control 1: flour prepared by adding 2% of commercially available Vital Gluten (Canada, IGP gluten) to noodle flour (Semi-hard flour),
Control 2: flour prepared by adding 2% of PL gluten to noodle flour (Semi-hard flour).
Control 3: flour prepared by adding 0.02% PL-A to noodle (Semi-hard) flour.
Control 4: plain noodle (Semi-hard) flour, no additives.

TABLE 2

| | Bread made of quality-improved flour | Control | | | |
|---|---|---|---|---|---|
| | | 1 | 2 | 3 | 4 |
| Dough physical properties: | | | | | |
| Elasticity | 4 | 5 | 4 | 4 | 2 |
| Extensibility | 5 | 4 | 5 | 4 | 2 |
| Non-stickiness | 4 | 4 | 4 | 3 | 2 |
| Moldability | 5 | 2 | 4 | 4 | 2 |
| Product qualities: | | | | | |
| Specific volume | 5.65 | 5.41 | 5.50 | 5.13 | 5.02 |
| Appearance | 5 | 4 | 4 | 3 | 2 |
| Inner state | 4 | 3 | 4 | 3 | 2 |
| Texture | 5 | 3 | 4 | 3 | 2 |
| Relative staleness* | 70 | 89 | 81 | 90 | 100 |

*Relative staleness:
Measured by using Baker's compressimeter and expressed as a percentage taking control 4 as 100%.

Evaluation mark:
5: very good
4: good
3: ordinary
2: slightly poor
(The following tables have the same definition as to the above evaluation marks).

The product of the present invention is superior to controls 1 to 4 in respect of both the physical properties of the dough and the qualities of the final product.

Example 3
In this Example, a good quality improving agent was obtained by uniformly mixing 100 kg of PL gluten, 1 kg of PL-A (1,000,000 u) and 1 kg of beta-amylase (10,000,000 u) in a blender.
The food quality improving agent was then added to graham flour (coarse powder) in an amount of 5% based on the flour and blended in a flour milling plant to obtain a quality-improved graham flour.
Then, using that flour, graham bread was prepared using the following composition and production conditions.

4

Sponge composition:

| | |
|---|---|
| Quality-improved graham flour | 6,000 g |
| Yeast | 250 g |
| Yeast food (as previously) | 15 g |
| Glycerol fatty acid ester | 20 g |
| Calcium stearyl lactate | 30 g |
| Water | 4,000 cc |

Dough composition:

| | |
|---|---|
| High gluten first flour | 4,000 g |
| Sugar | 800 g |
| Table salt | 230 g |
| Shortening | 500 g |
| Skim milk | 300 g |
| Malt extract | 30 g |
| Water | 2,000 cc |

Production conditions:

| | |
|---|---|
| Sponge fermentation | 23 to 24°C, 4 hours |
| Floor time | 20 min. |
| Bench time | 18 min. |
| Proofing | 40°C, 50 min. |
| Baking | 200°C, 25 min. |

As Controls, graham bread was obtained in the same manner as described above except using the graham flour prepared by adding 5% of commercially available Vital Gluten (Canada IGP gluten) to the graham flour, instead of the quality-improved graham flour (Control 1) and graham flour without any additions (Control 2).

The products were evaluated and the result of the evaluation is shown in Table 3.

TABLE 3

| | Specific volume | Appearance | Inner state | Texture | Note |
|---|---|---|---|---|---|
| Bread made from the quality-improved graham flour | 4.50 | 5 | 5 | 5 | Texture is soft |
| Control 1 | 4.40 | 5 | 4 | 4 | Texture is slightly soft |
| Control 2 | 4.30 | 3 | 3 | 2 | Not voluminous |

As is apparent from Table 3, the graham bread obtained using the improver of the present invention is superior to Controls 1 and 2 in respect of volume, inner state and texture.

Example 4

In this example, various doughs were produced by the sponge and dough method (see example 2) and used to wrap bean jam in a Rheone 207 type incrusting machine. The various dough compositions and processing conditions were as follows:

Compositions:

| Sponge: | | |
|---|---|---|
| Flour | 2,100 g | (70%) |
| Sugar | 120 g | (4%) |
| Yeast food | 3 g | (0.1%) |
| Yeast | 105 g | (3.5%) |
| Improving agent A* (see below) | 0 or 90 | (0 or 3%) |
| Water | 1,170 or 1,290 cc | (39 or 43%) |

| Dough: | | |
|---|---|---|
| Flour | 900 g | (30%) |
| Sugar | 630 g | (21%) |
| Table salt | 24 g | (0.8%) |
| Whole eggs | 240 g | (8%) |
| Shortening | 180 g | (6%) |
| Water | 210 g | (7%) |

* Composition of food quality improving agent A

| | (1) | (2) | (3) |
|---|---|---|---|
| PL gluten | 75% | 75% | 60% |
| Commercially available gluten | 22.8% | 22.8% | 27.8% |
| Ascorbic acid | 0.2% | 0.2% | 0.2% |
| Xanthan gum | 1.5% | 2% | 2% |
| Locust bean gum | 0.5% | 0% | 0% |

Process conditions:

| | |
|---|---|
| Sponge mixing temperature | 25°C |
| Fermentation | 27°C, 150 min. |
| Dough mixing temperature | 28°C |
| Floor time | 45 min. |
| Punching | 45 sec. |
| | (Rheone punch machine) |

| Wrapping beam jam by Rheone 207 type incrusting machine | |
|---|---|
| Proofing | 38°C, RH 85%, 50 min. |
| Baking | 210°C, 8 min. |

The products were evaluated and the results of the evaluation are shown in Table 4.

TABLE 4

| Test group | Additives | State of dough when wrapping bean jam | Specific volume | Grain | Softness |
|---|---|---|---|---|---|
| I | Flour only | – | 3.64 | – | – |
| II | Quality improving agent A-(1) | + | 4.00 | ++ | + |
| III | Quality improving agent A-(2) | + | 3.95 | + | + |
| IV | Quality improving agent A-(3) | + | 3.85 | + | + |
| V | PL gluten | + | 3.80 | + | ± |
| VI | Commercially available gluten | – | 3.72 | ± | + |

–: poor;    ±: ordinary;    +: good;    ++: very good.

Specific volume:
Measured after the bean jam bread was baked and allowed to stand overnight; weight ratio of bean jam to dough was 1:1.

As is apparent from Table 4, the dough improving agent according to this invention containing PL gluten (test groups II to V) improved the volume, appearance and grain of bean jam bread. Such effect could be obtained to some extent by using PL gluten alone (test gruop V) but was more remarkably increased by adding gum to the improving agent.
On the other hand, the use of commercially available gluten showed considerably less effect.

Example 5
In this example, bean jam yeast doughnuts were prepared from the following compositions by the straight method using Rheone 207 type incrusting machine.

Compositions:

| | | |
|---|---|---|
| Flour | 3,000 g | (100%) |
| Sugar | 390 g | (13%) |
| Table salt | 27 g | (0.9%) |
| Shortening | 240 g | (8%) |
| Skim milk | 60 g | (2%) |
| Yeast food | 3.6 g | (0.12%) |
| Baking powder | 75 g | (2.5%) |
| Quality improving agent B* (see below) | 0 or 60 g | (0 or 2%) |

\* Composition of food quality improving agent B

| | (1) | (2) | (3) |
|---|---|---|---|
| PL gluten | 75% | 60% | 60% |
| Commercially available gluten | 22.8% | 27.8% | 37.5% |
| Ascorbic acid | 0.2% | 0.2% | 0.2% |
| Xanthan gum | 2% | 2% | 2% |
| Soybean | 0% | 10% | 0% |
| Beta-amylase | 0% | 0% | 0.3% |

The products were evaluated and the results are presented in Table 5.

7

# EP 0 171 995 B1

## TABLE 5

| Test group | Additives | State of dough when wrapping bean jam | Specific volume | Oil-absorbing rate (%)* |
|---|---|---|---|---|
| I | Flour only | — | 1.92 | 10.8 |
| II | Quality improving Agent B-(1) | + | 2.36 | 7.5 |
| III | Quality improving agent B-(2) | ++ | 2.38 | 6.8 |
| IV | Quality improving agent B-(3) | + | 2.41 | 7.7 |
| V | PL gluten | ± | 2.20 | 8.0 |
| VI | Commercially available gluten | ± | 2.05 | 7.7 |

−: poor;     ±: ordinary;     +: good;     ++: very good.

Oil-absorbing rate:

$$\frac{\text{Weight after fried} - \text{weight before fried}}{\text{Weight before fried}} \times 100$$

As is apparent from Table 5, the quality improving agent containing PL gluten (test groups II to IV) improved not only the state of the dough and the volume of product, but also the oil-absorbing rate, which is quite important for good quality doughnuts.

In this regard, the use of commercially available gluten (test group VI) showed only poor improvement in the specific volume.

Reference example

In this Reference Example, calcium chloride was added to 400 ml of a 15% (w/w) aqueous dispersion of purified soybean lecithin (SLP-White, product of True Lecithin Co. Ltd) to a concentration of 20 mM. 1,200 mg (504 units) of PL-A were then added, and the mixture allowed to react at pH 9.0 at 55°C fr 2 hours. There was thus obtained a modified phospholipid dispersion wherein the content of monoacyl glycerophospholipid is 75 mol%. 100 ml of the modified phospholipid dispersion and 1,000 g of commercially available vital gluten (Emasoft Ex-100, product of Riken Vitamin Co. Ltd.) were then mixed with stirring and the mixture lyophilized and pulverized to obtain a powdery gluten.

That complete procedure of mixing the pulverized powdery gluten with 100 ml quantities of modified phosphilipid dispersion, stirring, lyophilizing and pulverizing was repeated three times making a total addition of 400 ml of the modified phospholipid. The bound phospholipid content of the final product thus obtained was 3.5% (w/w) and the bound monoacyl glycerophospholipid content was 68 mol%.

## Claims

1. A food improving agent comprising as an essential ingredient vital gluten, said vital gluten having either i) a bound phospholipid content of 2% (w/w) or more and a bound monoacyl glycerophospholipid content in the bound phospholipid of more than 30 mol% and less than 50 mol% or ii) a bound phospholipid content of 0.5% (w/w) or more and a bound monoacyl glycerophospholipid content in the bound phospholipid of 50 mol% or more, characterised in that the improving agent additionally contains, in admixture with said vital gluten, one or more of the following: phospholipase A, gum, vital gluten wherein the bound monoacyl glycerophospholipid content of the bound phospholipid is less than 30 mol%, ascorbic acid, monoglyceride, soybean lecithin, whey protein, soybean protein, sodium caseinate, citric acid, succinic acid, α-amylase or β-amylase.

2. A food improving agent according to Claim 1, characterised in that it contains one or more of said additives in the following amounts, said amounts being expressed as parts by weight per hundred parts of said vital gluten:

| | | |
|---|---|---|
| Phospholipase-A (1000 u/g) | : | 0.01—5 |
| Vital gluten, bound phospholipid content less than 30 mol% | : | 5—70 |
| Ascorbic acid | : | 0.1—0.5 |
| Gum | : | 0.5—5 |
| Monocylceride | : | 0.1—10 |
| Soybean lecithin | : | 0.1—10 |
| Whey protein | : | 1—30 |
| Soybean protein | : | 1—30 |
| Sodium caseinate | : | 0.1—1 |
| Citric acid | : | 0.1—1 |
| Succinic acid | : | 0.1—1 |
| α-amylase (10000 u/g) | : | 0.1—1 |
| or β-amylase (10000 u/g) | : | 0.1—1 |

3. A food improving agent according to Claim 1 or 2, which contains as said additive, or one of said additives, xanthan gum or locust bean gum.

4. A food improving agent according to Claim 1, 2 or 3, additionally containing, per 100 parts by weight of said vital gluten;

| | |
|---|---|
| L-lysine hydrochloride | 0.1—10 parts |
| L-proline | 0.1—10 parts |
| and/or sodium lactate | 0.5—10 parts |

**Patentansprüche**

1. Mittel zur Verbesserung von Nahrungsmitteln, enthaltend als Wirkstoff Vital-Gluten, wobei das Gluten entweder 1) einen Gehalt an gebundenem Phospholipid von 2% (Gew./Gew.) und einen Gehalt an gebundenem Monoacylglycerophospholipid im gebundenen Phospholipid von mehr als 40 Mol-% und weniger als 50 Mol-% aufweist, oder 2) einen Gehalt an gebundenem Phospholipid von 0,5 % (Gew./Gew.) oder mehr und einen Gehalt an gebundenem Monoacylglycerophospholipid im gebundenen Phospholipid von 50 Mol-% oder mehr aufweist, dadurch gekennzeichnet, daß das Verbesserungsmittel zusätzlich im Gemisch mit dem Vital-Gluten einen oder mehrere der folgenden Stoffe enthält: Phospholipase A, Gummi, Vital-Gluten, in dem der Gehalt an gebundenem Monoacylglycerophospholipid im gebundenen Phospholipid weniger als 30 Mol-% beträgt, Ascorbinsäure, Monoglycerid, Sojabohnenlecithin, Molkeprotein, Sojabohnenprotein, Natriumcaseinat, Citronensäure, Bernsteinsäure, α-Amylase oder β-Amylase.

2. Mittel zur Verbesserung von Nahrungsmitteln gemäß Anspruch 1, dadurch gekennzeichnet, daß es einen oder mehrere der Zusatzstoffe in den folgenden Menge enthält, wobei die Mengen als Gewichtsteile pro 100 Teile Vital-Gluten angegeben sind:

| | | |
|---|---|---|
| Phospholipase A (1000 µ/g) | : | 0,01—5 |
| Vital-Gluten, in dem der Gehalt an gebundenem | : | 5—70 |
| Phospholipid weniger als 30 Mol-% beträgt | | |
| Ascorbinsäure | : | 0,1—0,5 |
| Gummi | : | 0,5—5 |
| Monoglycerid | : | 0,1—10 |
| Sojabohnenlecithin | : | 0,1—10 |
| Molkeprotein | : | 1—30 |
| Sojabohnenprotein | : | 1—30 |
| Natriumcaseinat | : | 0,1—1 |
| Citronensäure | : | 0,1—1 |
| Bernsteinsäure | : | 0,1—1 |
| α-Amylase (10 000 µ/g) | : | 0,1—1 |
| oder β-Amylase (10 000 µ/g) | : | 0,1—1 |

3. Mittel zur Verbesserung von Nahrungsmitteln gemäß Anspruch 1 oder 2, welches als Zusatzstoff oder einen der Zusatzstoffe Xanthangummi oder Carobegummi enthält.

4. Mittel zur Verbesserung von Nahrungsmitteln gemäß Anspruch 1, 2 oder 3, zusätzlich pro 100 Gew.-Teile des Vital-Glutens enthaltend:

| | |
|---|---|
| L-Lysin-hydrochlorid | 0,1—10 Teile |
| L-Prolin | 0,1—10 Teile |
| und/oder Natriumlactat | 0,5—10 Teile. |

# EP 0 171 995 B1

**Revendications**

1. Agent d'amélioration de produits alimentaires, comprenant en tant qu'ingrédient essentiel du gluten élastique, ledit gluten élastique ayant soit I) une teneur de 2% (p/p) ou plus en phospholipide lié et une teneur du phospholipide lié en glycérophospholipide monoacylé lié supérieure à 30% en mole et inférieure à 50% en mole, soit II) une teneur de 0,5% (p/p) ou plus en phospholipide lié et une teneur du phospholipide lié en glycérophospholipide monoacylé lié égale à 50% en mole ou plus, caractérisé en ce que l'agent d'amélioration contient en mélange avec ledit gluten élastique un ou plusieurs des composants suivants: phospholipase A, gomme, gluten élastique dans lequel la teneur du phospholipide lié en glycérophospholipide monoacylé lié est inférieure à 30% en mole, acide ascorbique, monoglycéride, lécithine de soja, protéine de lactosérum, protéine de soja, caséinate de sodium, acide citrique, acide succinique, α-amylase ou β-amylase.

2. Agent d'amélioration de produits alimentaires selon la revendication 1, caractérisé en ce qu'il contient un ou plusieurs desdits additifs en les quantités suivantes, lesdites quantités étant exprimées en parties en poids pour 100 parties dudit gluten élastique:

| | |
|---|---|
| Phospholipase A (1 000 U/g) | : 0,01—5 |
| Gluten élastique, teneur en phospholipide lie inférieure à 30% en mole | : 5—70 |
| Acide ascorbique | : 0,1—0,5 |
| Gomme | : 0,5—5 |
| Monoglycéride | : 0,1—10 |
| Lécithine de soja | : 0,1—10 |
| Protéine de lactosérum | : 1—30 |
| Protéine de soja | : 1—30 |
| Caséinate de sodium | : 0,1—1 |
| Acide citrique | : 0,1—1 |
| Acide succinique | : 0,1—1 |
| α-amylase (10 000 U/g) | : 0,1—1 |
| ou β-amylase (10 000 U/g) | : 0,1—1 |

3. Agent d'amélioration de produits alimentaires selon la revendication 1 ou 2, lequel contient, en tant qu'additif ou l'un desdits additifs, de la gomme de xanthanne ou de la gomme de carbone.

4. Agent d'amélioration de produits alimentaires selon la revendication 1, 2 ou 3, contenant en outre, pour 100 parties en poids dudit gluten élastique:

| | |
|---|---|
| Chlorhydrate de L-lysine | 0,1—10 parties |
| L-proline | 0,1—10 parties |
| et/ou Lactate de sodium | 0,5—10 parties. |